# EUROPEAN PATENT APPLICATION

(11) **EP 2 567 768 A1**
(43) Date of publication of application: **13.03.2013**
(21) Application number: 11777469.5
(22) Date of filing: 02.05.2011
(51) Int. Cl.: B23C 5/20, B23C 5/06

(54) **CUTTING INSERT, AND BLADE TIP REPLACEMENT TYPE CUTTING TOOL**

(30) Priority: 06.05.2010 JP 2010106794
(71) Applicant: Tungaloy Corporation, Iwaki-shi Fukushima 970-1144 (JP)
(72) Inventor: YOSHIDA Satoru, Iwaki-shi Fukushima 970-1144 (JP)
(74) Representative: Vossius & Partner
(86) International application number: PCT/JP2011/060542
(87) International publication number: WO 2011/138950

(57) **Abstract**

A cutting insert which prevent occurrence of burrs and enables highly efficient processing is provided. A cutting insert (1) has a cutting edge formed at an intersection portion between a rake face and a flank, the cutting edge includes a corner portion (20), a first main cutting edge (21) formed on one side of the corner portion, and a second main cutting edge (22) formed on the other side of the corner portion, the second main cutting edge (22) includes a descending inclination portion (22a) gradually inclined in a direction from the side of a surface on which the rake face (11) is formed in the top and bottom surfaces toward the side of a surface facing the rake face as it separates from the corner portion and an ascending inclination portion (22b) gradually inclined in a direction from the side of the surface facing the rake face toward the side of the surface on which the rake face is formed, as it separates from the corner portion, the descending inclination portion is connected to the corner portion, the ascending inclination portion is connected to the descending inclination portion, and at least a connection region between the ascending inclination portion and the descending inclination portion has a recess portion (24) curved in a recess state.

## Description

### Technical Field

The present invention relates to a cutting insert and an indexable cutting tool to which the cutting insert can be attached.

### Background Art

Burrs occurring in face milling operation are removed in a deburring process provided after the face milling operation is finished in general. In contrast, regarding workpiece edge chipping occurring in milling operation of casting, a cutting condition under which workpiece edge chipping can hardly occur is required to be set in general in order to prevent the occurrence. Moreover, technologies to suppress burrs or workpiece edge chipping in the face milling operation have been known. Such technologies include the following.

In a prior-art technology in Patent Literature 1, a circular insert for burr suppression (deburring tip) is installed in addition to a rough processing insert aimed at main cutting. This insert for burr suppression has a disk shape and a cutting edge is formed at a crossing ridge portion between the side face and the circumferential face of the circular shape.

### Citation List

### Patent Literature

PTL 1: Japanese Patent Laid-Open No. H08-52611(1996)

### Summary of Invention

### Technical Problem

However, the object of the invention of Patent Literature 1 is to suppress occurrence of a burr by using a face mill attached in a combination of a rough processing insert for main cutting and an insert for burr suppression in which a wiper cutting edge for suppressing burrs is provided, and thus Patent Literature 1 has the following problems.

The first problem is that, since two types of tips which are the insert for rough processing and the insert for burr suppression are required to be prepared, the types of stocks of cutting inserts increase.

The second problem is that tool lives of the insert for rough processing and the insert for burr suppression are different, and if one of them expires, the both inserts may have to be replaced at the same time in many cases. Therefore, the respective cutting inserts cannot be used effectively, and a tool cost rises.

The present invention has been made in order to solve the above problems. That is, the present invention has an object to provide a cutting insert having both a cutting edge for rough processing and a cutting edge for burr suppression and an indexable cutting tool provided with the cutting insert.

### Solution to Problem

A cutting insert according to the present invention is formed of a plate-like member with a substantially polygonal outer shape and including:
a rake face formed on at least one of top and bottom surfaces opposite to each other in a direction of a central axis of the cutting insert;
a flank extending between the top and bottom surfaces and being formed on an outer peripheral surface of the cutting insert; and
a cutting edge formed at an intersection portion between the rake face and the flank, wherein
the cutting edge comprises a corner portion, a first main cutting edge formed on one side of the corner portion, and a second main cutting edge formed on the other side of the corner portion;
the second main cutting edge comprises a descending inclination portion gradually inclined in a direction from the side of a face on which the rake face is formed in the top and bottom surfaces toward the side of a surface facing the rake face as it separates from the corner portion and an ascending inclination portion gradually inclined in a direction from the side of the surface facing the rake face toward the side of the surface on which the rake face is formed, as it separates from the corner portion;
the ascending inclination portion is connected to the descending inclination portion; and
at least a connection region of the ascending inclination portion and the descending inclination portion forms a concave curved recess portion.

An indexable cutting tool according to the present invention, including:
the above cutting insert; and
a tool body in which an insert mounting seat for detachably attaching the insert is provided at a predetermined position, wherein
the cutting insert is attached to the tool body, such that
the first main cutting edge is disposed so as to protrude from an outer peripheral surface of the tool body,
the second main cutting edge is disposed so as to protrude from a leading end surface of the tool body,
the descending inclination portion of the second main cutting edge comprises a negative cutting edge angle; and
the ascending inclination portion of the second main cutting edge comprises a positive cutting edge angle.

### Advantageous Effects of Invention

When the cutting insert of the present invention is attached to the indexable cutting tool so as to perform a cutting work of a workpiece, the first main cutting edge and the corner portion are in charge of rough cutting processing of the workpiece. In contrast, a part of the ascending inclination portion of the second main cutting edge works as a burr-suppressing edge having a slight cutting edge angle. As a result, even if a burr occurs on a worked surface in the rough cutting processing using the first main cutting edge, the burr is removed by the burr-suppressing edge, and thus the occurrence of burrs or workpiece edge chipping can be prevented. That is, if the cutting insert of the present invention is used, the rough processing and the deburring processing are performed at the same time with one type of the cutting insert. Therefore, processing without burrs under the cutting condition for rough processing is made possible. In other words, the cutting insert of the present invention is capable of suppressing the occurrence of burrs or workpiece edge chipping without degrading the cutting condition.

A recess portion not in contact with the workpiece is formed in the vicinity of the intersection portion between the descending inclination portion and the ascending inclination portion of the second main cutting edge. Since the burr-suppressing edge formed of a part of the ascending inclination portion and the first main cutting edge as well as the corner portion sandwiching this recess portion between them are separated from each other, chips generated from the burr-suppressing edge and the chips generated from the first main cutting edge and the corner portion are separated from each other. Therefore, the generated chips are discharged smoothly. Moreover, since the cutting edge angle and the length of the cutting edge can be set individually for the first main cutting edge and the burr-suppressing edge, they can be set appropriately for each processing.

A radial rake angle of the ascending inclination portion serving as the burr-suppressing edge is inclined to the negative side. Therefore, a direction of a reaction force caused by cutting resistance generated in the ascending inclination portion is oriented to the outside of the cutting tool. That is, when drilling through by rotation of the cutting insert, the reaction force is oriented in a direction of detaching burrs from the workpiece. Moreover, the ascending inclination portion gradually departs from the workpiece over time as compared with small inclination of the radial rake angle to the negative side. That is, it passes through a departing portion from the workpiece while the cutting edge is largely inclined. Since the workpiece is cut in a state where the cutting edge is inclined, cutting resistance is further lowered, and burrs are reliably cut off. As a result, the occurrence of burrs is effectively prevented.

### Brief Description of Drawings

[Fig. 1] Fig. 1 is a plan view illustrating a first embodiment of a cutting insert of the present invention;
[Fig. 2] Fig. 2 is a front view of the cutting insert illustrated in Fig. 1;
[Fig. 3] Fig. 3 is a perspective view of the cutting insert illustrated in Fig. 1;
[Fig. 4] Fig. 4 is an enlarged front view of a second main cutting edge of the cutting insert illustrated in Fig. 1; [Fig. 5] Fig. 5 is a plan view illustrating an indexable face milling cutter to which the cutting insert illustrated in Fig. 1 is attached;
[Fig. 6] Fig. 6 is a front view of the indexable face milling cutter illustrated in Fig. 5;
[Fig. 7] Fig. 7 is a perspective view of the indexable face milling cutter illustrated in Fig. 5;
[Fig. 8] Fig. 8 is an exploded perspective view of an essential part of the indexable face milling cutter illustrated in Fig. 5;
[Fig. 9] Fig. 9 is a plan view illustrating a second embodiment of the cutting insert of the present invention;
[Fig. 10] Fig. 10 is a front view of the cutting insert illustrated in Fig. 9;
[Fig. 11] Fig. 11 is a perspective view of the cutting insert illustrated in Fig. 9;
[Fig. 12] Fig. 12 is an enlarged front view of the second main cutting-edge of the cutting insert illustrated in Fig. 9;
[Fig. 13] Fig. 13 is a plan view illustrating an indexable face milling cutter to which the cutting insert illustrated in Fig. 9 is attached;
[Fig. 14] Fig. 14 is a front view of the indexable face milling cutter illustrated in Fig. 13;
[Fig. 15] Fig. 15 is a perspective view of the indexable face milling cutter illustrated in Fig. 13;
[Fig. 16] Fig. 16 is a diagram illustrating a state of drilling through a workpiece of the indexable face milling cutter illustrated in Figs. 5 and 13;
[Fig. 17] Fig. 17 is a diagram illustrating a state of drilling through a workpiece of the indexable face milling cutter illustrated in Figs. 5 and 13; and
[Fig. 18] Fig. 18 is a diagram illustrating a cutting-edge rotation shape of the indexable face milling cutter illustrated in Figs. 5 and 13.

### Description of Embodiments

### (First Embodiment)

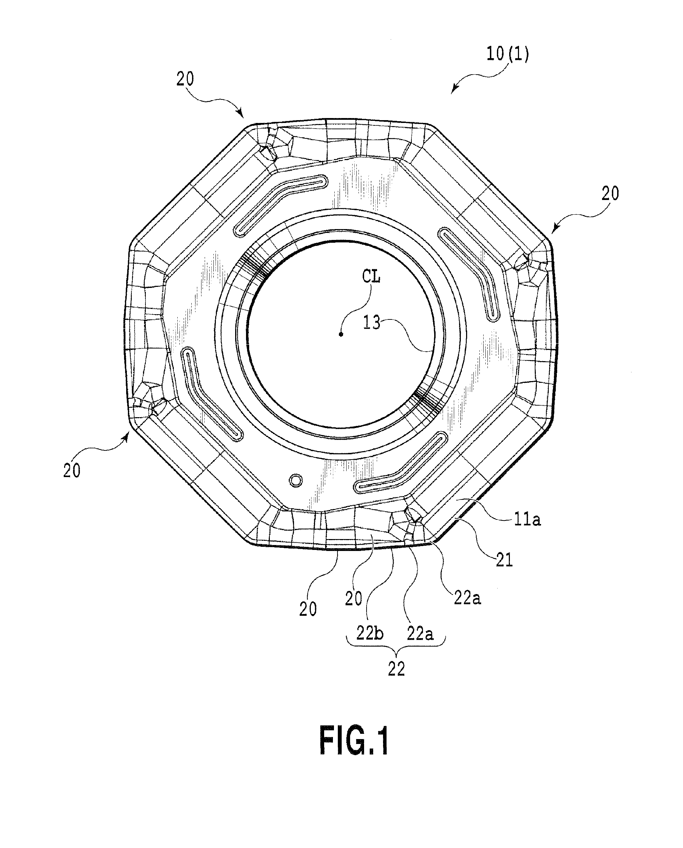

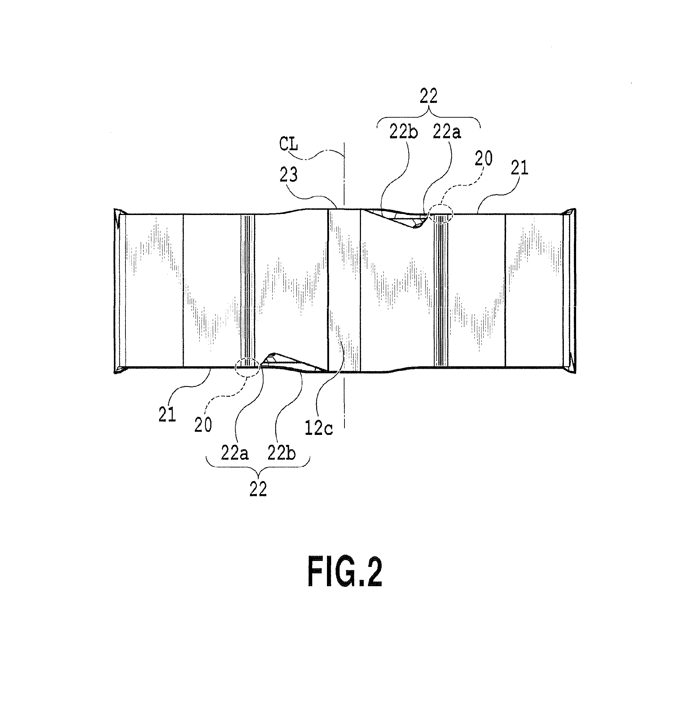

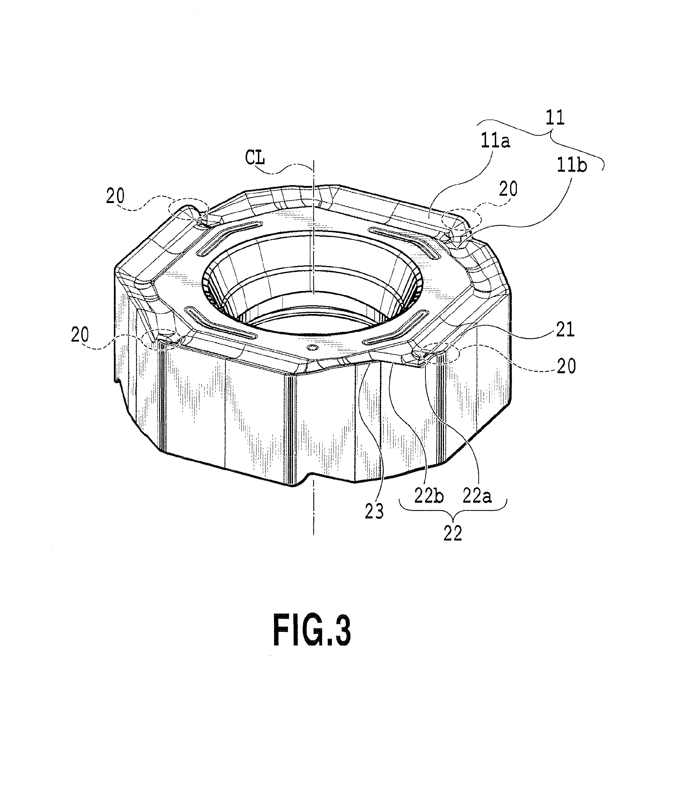

A cutting insert 1 according to a first embodiment as illustrated in Figs. 1 to 3 has an approximately octagonal plate shape. A cutting insert 1 has a mounting hole 13 penetrating top and bottom surfaces having a central axis CL at the center. A rake face 11 is formed on the approximately octagonal top and bottom surfaces facing each other in the central axis CL direction (thickness direction) of the cutting insert 1. A flank 12 is formed on an outer peripheral surface extending in a direction parallel to the thickness direction between the octagonal surfaces facing each other vertically. The cutting insert 1 is orthogonal to the central axis CL, passes in the middle of the top and bottom surfaces and is rotationally symmetric by 180° with respect to an axis parallel to a first main cutting edge.

The cutting edge of the cutting insert 1 of this embodiment is formed at intersection portions between the top surface as well as the bottom surface and the outer peripheral surface, respectively, and is formed each in the vicinity of four corner portions 20 in eight corner portions formed on the top surface and the bottom surface, respectively. Each of the cutting edges includes a first main cutting edge 21, a second main cutting edge 22, and a wiper cutting edge 23. The first main cutting edge 21 and the second main cutting edge 22 are connected to each other via the corner portion 20, and the second main cutting edge 22 and the wiper cutting edge 23 are connected to each other. The first main cutting edge 21 is formed at an intersection portion between a rake face 11a and a flank 12a, while the second main cutting edge 22 is formed at an intersection portion between a rake face 11b and a flank 12b, and the wiper cutting edge 23 is formed at an intersection portion between a rake face 11c and a flank 12c. The corner portion 20 is formed in an approximately arc shape when the cutting insert 1 is seen on plan view. Each of the corner portions 20 is disposed rotationally symmetrically by 90° with respect to the central axis CL. The first main cutting edge 21 extends approximately linearly in a plane orthogonal to the central axis CL of the cutting insert 1 (*1). The rake face 11a adjacent to the first main cutting edge 21 is inclined in a direction where the thickness of the cutting insert 1 in the central axis CL direction decreases as it separates from the first main cutting edge 21 toward the central axis CL side, and has a positive rake angle.

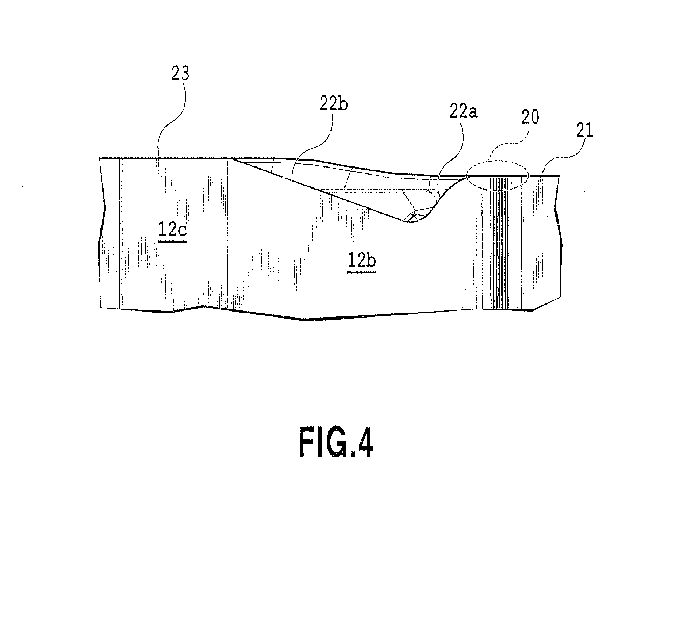

As illustrated in Fig. 4, the second main cutting edge 22 has a descending inclination portion 22a connected to the first main cutting edge 21 through the corner portion 20 and an ascending inclination portion 22b connected to the wiper cutting edge 23. A connection portion between the descending inclination portion 22a and the corner portion 20 is smoothly curved. Then, the descending inclination portion 22a is formed so as to be inclined in a direction where the thickness of the cutting insert 1 in the central axis CL direction gradually decreases, as it separates in a direction from the corner portion 20 toward the wiper cutting edge 23. That is, the descending inclination portion 22a formed on the top surface is formed so as to incline in a direction from the top surface side toward the bottom surface side, while the descending inclination portion 22a formed on the bottom surface is formed so as to be inclined in a direction from the bottom surface side toward the top surface side. The ascending inclination portion 22b is connected at a lowest point of the descending inclination portion 22a, and the ascending inclination portion 22b is inclined in a direction where the thickness of the cutting insert 1 in the central axis CL direction gradually increases, as it separates from the corner portion 20 toward the wiper cutting edge 23. That is, the ascending inclination portion 22b formed on the top surface is formed so as to be inclined in an upper left direction from the bottom surface side toward the top surface side, while the ascending inclination portion 22b formed on the bottom surface is formed so as to be inclined in a lower right direction from the top surface side toward the bottom surface side. Meanwhile, the ascending inclination portion 22b and the descending inclination portion 22a are smoothly connected. A flank 12b of second main cutting edge 22 is made up of a single plane.

The rake face 11b corresponding to the second main cutting edge 22 has a descending inclination surface and an ascending inclination surface corresponding to the descending inclination portion 22a and the ascending inclination portion 22b, and they are inclined in a direction where the thickness of the cutting insert 1 in the central axis CL direction decreases, as it separates from the second main cutting edge 22 toward the central axis CL direction, and has a positive rake angle.

As illustrated in Figs. 1 to 3, the approximately linear wiper cutting edge 23 is connected to the ascending inclination portion 22b of the second main cutting edge 22. The wiper cutting edge 23 intersects with the ascending inclination portion 22b of the second main cutting edge 22 at an obtuse angle when viewed from the direction of the central axis CL. Moreover, the wiper cutting edge 23 extends linearly in the plane orthogonal to the central axis CL of the cutting insert 1 when the wiper cutting edge 23 is seen from the side facing the flank 12c extending from the wiper cutting edge 23. Meanwhile, formation of the wiper cutting edge 23 may be omitted. A ridge 26 extending from an end portion on the side opposite to the ascending inclination portion 22b of the wiper cutting edge 23 is formed at an intersection portion between the flank 12b extending from the second main cutting edge 22 formed on the bottom surface and the rake face 11b on the top surface of the cutting insert 1, and this ridge 26 intersects with the wiper cutting edge 23 at an obtuse angle when viewed from the direction of the central axis CL.

The cutting insert 1 of this embodiment has the corner portion 20, the first main cutting edge 21, the second main cutting edge 22, and the wiper cutting edge 23 formed at four spots on the top surface and at four spots on the bottom surface, and the top surface or the bottom surface is selectively used as the rake face 11. Therefore, the cutting insert 1 can make use of eight corners in total as cutting edges.

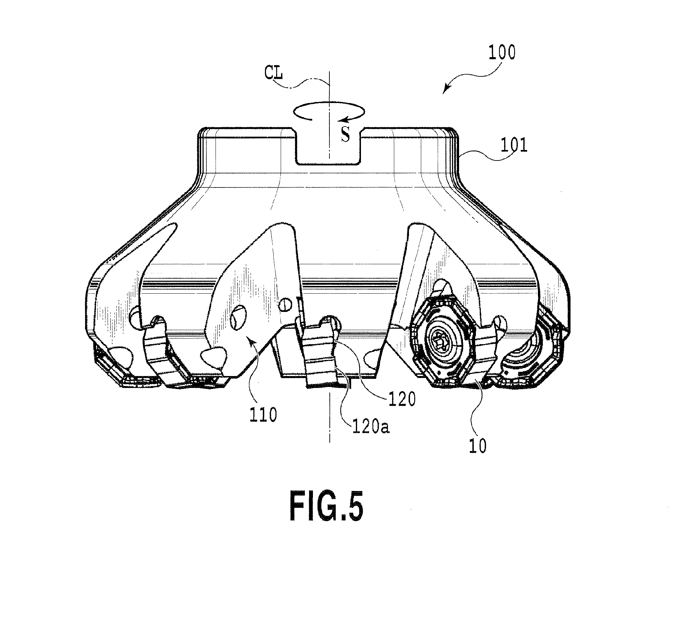

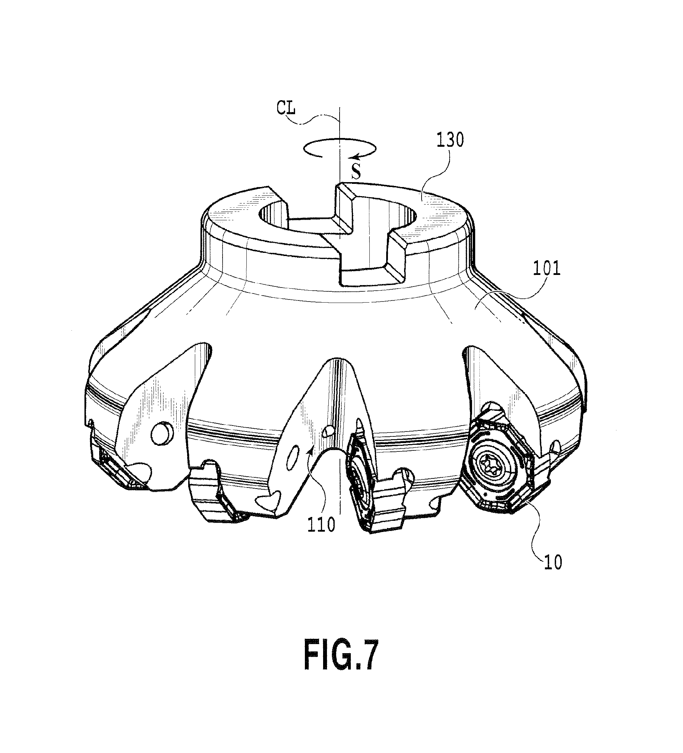

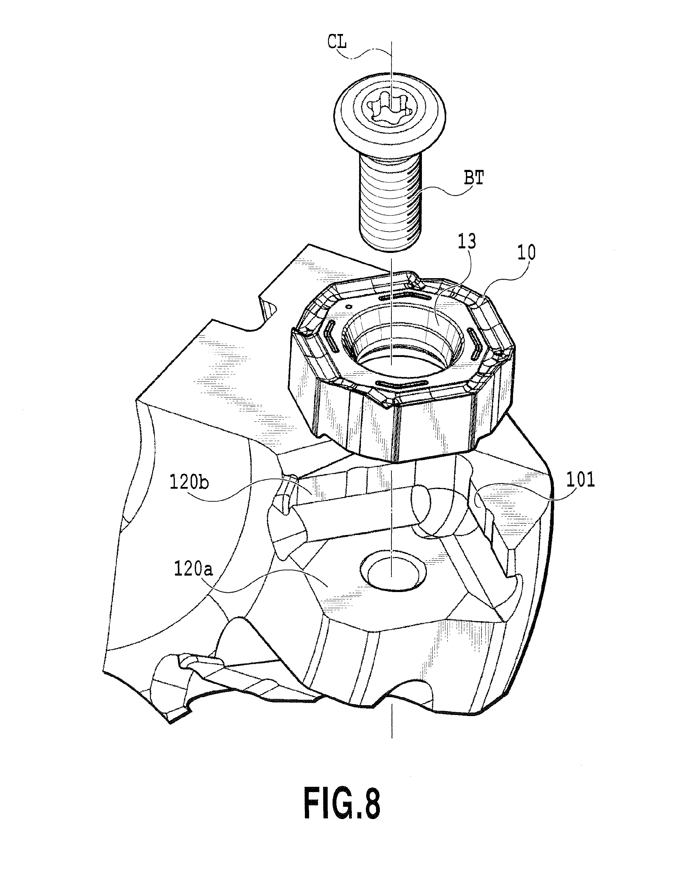

Next, an indexable face milling cutter 100 to which the cutting insert 1 of this embodiment is attached will be described. As illustrated in Figs. 5 to 8, the indexable face milling cutter 100 has an approximately disk-shaped tool body 101 rotating around a rotation axis AX. The tool body 101 has a mounting reference face 130 on an end face of its base end side and a screw hole for attaching a main shaft (not shown) of a machine tool via a retainer such as an arbor along the rotation axis AX. A plurality of chip pocket 110 is formed (8 spots) at approximately equal intervals along the peripheral direction on a leading end portion of the tool body 101. An insert mounting seat 120 is a recess portion having approximately the same octagonal shape as the top and bottom surfaces of the cutting insert 1 notched in a wall surface 110A directed to a tool rotating direction S of each chip pocket 110. A bottom surface 120a directed to the tool rotating direction S of the insert mounting seat 120 supports the top surface or the bottom surface of the cutting insert 1. Two wall surfaces 120b and 120c intersecting with this bottom surface 120a approximately at a right angle and being directed to the tool leading end side support the two outer peripheral surfaces in the outer peripheral surfaces of the cutting insert 1 (See Fig. 5). A screw hole approximately orthogonal to the bottom surface 120a is formed approximately at the central part of the bottom surface 120a of the insert mounting seat 120.

The bottom surface 120a of the insert mounting seat 120 is formed to be inclined toward the tool rotating direction S side with respect to the rotation axis AX of the tool body 101 and also to be inclined toward the tool rotating direction S side with respect to the radial direction of the tool body 101. That is, the insert mounting seat 120 is formed so that axial rake and radial rake of the cutting insert 1 attached thereto become negative. The cutting insert 1 is placed so that either the top surface or the bottom surface and two outer peripheral surfaces are in contact with the bottom surface 120a of the insert mounting seat 120 and the two wall surfaces 120b and 120c, respectively, and detachably attached by tightening a tightening screw BT inserted through a mounting hole 13 to the screw hole provided in the bottom surface 120a of the insert mounting seat 120. As a method of mounting the cutting insert 1 to the tool body 101, a wedge, a pressing piece and the like may be used other than the tightening screw.

The cutting insert 1, in accordance with the insert mounting seat 120, is attached to the tool body 101 so as to be inclined toward the tool rotating direction S side with respect to the rotation axis AX of the tool body 101 and so as to be inclined toward the tool rotating direction S side with respect to the radial direction of the tool body 101 and so that both the axial rake and radial rake become negative. In this embodiment, the axial rake is set to -6° and the radial rake to -5.5°. One of the corner portions 20 of the cutting insert 1 is disposed at the leading end outer peripheral portion of the tool body 101.

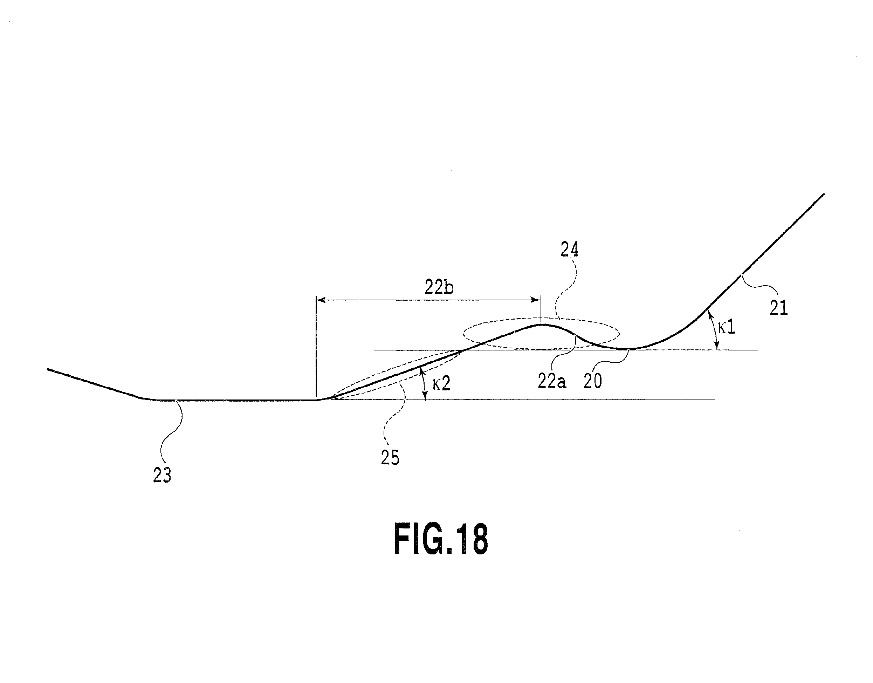

Fig. 18 is a diagram illustrating a cutting-edge rotation shape of the indexable face milling cutter of this embodiment. Meanwhile, the cutting-edge rotation shape is a curved shape defined by the cutting edge when the cutting edge is viewed from the direction along a main motion direction. When the tool body 101 is rotated around the rotation axis AX, the cutting-edge rotation shape of the corner portion 20, the first main cutting edge 21, the second main cutting edge 22, and the wiper cutting edge 23 becomes a shape as illustrated in Fig. 18. The first main cutting edge 21 extending from one of the corner portions 20 disposed at the leading end outer peripheral portion of the tool body 101 to the base end side and the outer periphery side of the tool body 101 is inclined with respect to the plane orthogonal to the rotation axis AX of the tool body 101, and the inclination angle, that is, a cutting edge angle κ1 is approximately 45°. The second main cutting edge 22 has a shape which will be described later by a combination of the respective inclinations of the descending inclination portion 22a and the ascending inclination portion 22b and the negative axial rake.

As illustrated in Fig. 18, in the cutting insert 1 attached to the tool body 101, the second main cutting edge 22 (descending inclination portion 22a and the ascending inclination portion 22b) and the wiper cutting edge 23 are sequentially formed from the corner portion 20 toward the inside in the radial direction of the tool body 101.

By arranging the cutting insert 1 so that the axial rake and the radial rake become negative, the descending inclination portion 22a of the second main cutting edge 22 is inclined continuously toward the base end side of the tool body 101 (connection portion side between the tool body and the machine tool) as it goes from the connection portion with the corner portion 20 toward the inside in the radial direction (direction toward the rotation axis AX of the tool body 101 or a direction indicated by an arrow in Fig. 18), while the ascending inclination portion 22b of the second main cutting edge 22 is inclined so as to continuously go toward the leading end side of the tool body 101, as it goes from the intersection portion with the descending inclination portion 22a toward the inside in the radial direction. At this time, the descending inclination portion 22a presents a negative cutting edge angle.

As a result, the descending inclination portion 22a and at least a connection region of the ascending inclination portion 22b connected to the descending inclination portion 22a form a recess portion 24 recessed (retreated) from the most leading end of the corner portion 20 toward the base end side of the tool body 101. This recess portion 24 is a portion not involved in cutting (not in contact with a workpiece) during the cutting processing. In this embodiment, a recess amount in the recess portion 24 from the most leading end of the corner portion 20 is 0.02 mm.

In contrast, the remaining portion of the ascending inclination portion 22b not forming the recess portion 24 protrudes closer to the leading end side of the tool body 101 than the most leading end of the corner portion 20, and this portion serves as a burr-suppressing edge 25 involved in cutting. An inner peripheral end of the burr-suppressing edge 25 and the wiper cutting edge 23 extending from this inner peripheral end to the inner periphery side of the tool body 101 are preferably located on the most leading end side in the indexable face milling cutter 100 and have a protrusion amount of 0.1 mm or more and 0.3 mm or less with respect to the most leading end of the corner portion 20. In this embodiment, the protrusion amount of the inner peripheral edge of the burr-suppressing edge 25 and the wiper cutting edge 23 is 0.17 mm.

The wiper cutting edge 23 has a linear shape and extends in a direction approximately parallel to a plane orthogonal to the rotation axis AX of the tool body 101. Moreover, a cutting edge angle κ2 of the burr-suppressing edge 25 is extremely smaller than the cutting edge angle κ1 of the first main cutting edge 21 and within a range of 5° or more and 15° or less. The angle κ2 of this embodiment is set to 5.5°.

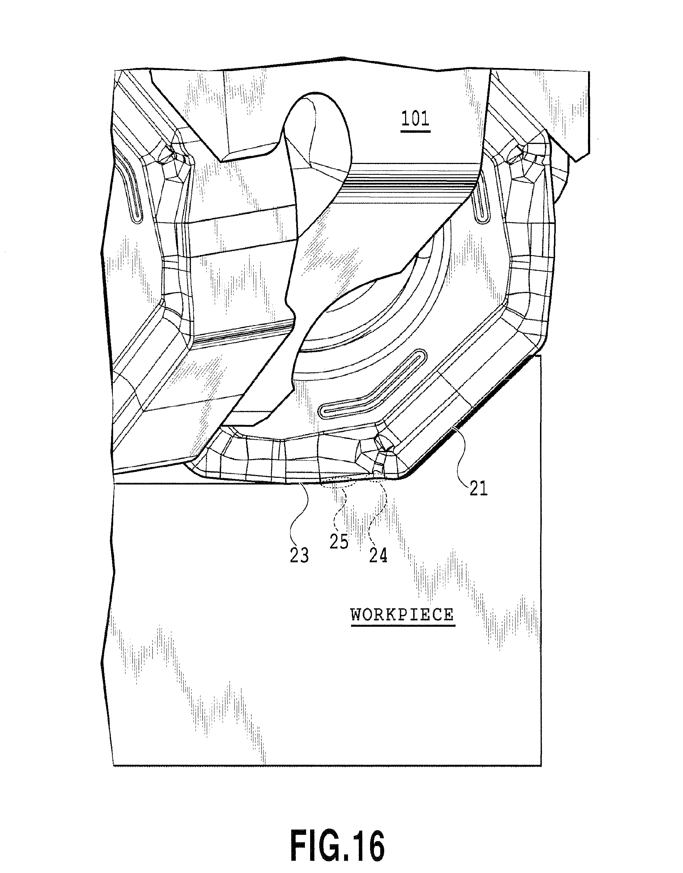

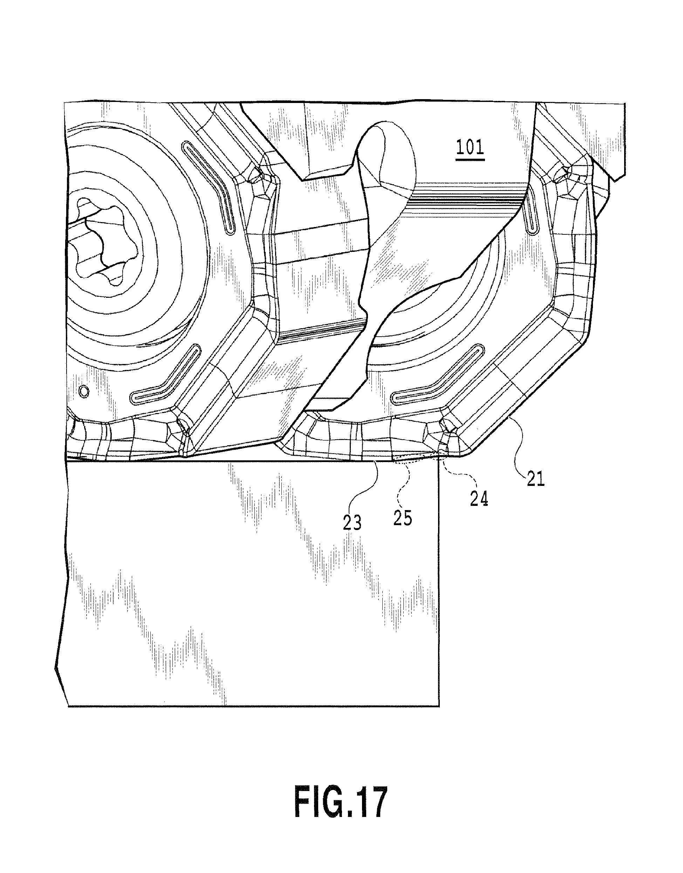

When the cutting insert 1 and the indexable face milling cutter 100 to which the cutting insert 1 is attached as described above perform a cutting work, first, the first main cutting edge 21 and the corner portion 20 of a cutting insert 3 on the first edge performs rough cutting processing of a workpiece. Subsequently, the burr-suppressing edge 25 of another cutting insert arranged in the rear of the cutting insert 3 having performed the rough cutting processing performs deburring processing of cutting off burrs generated by the cutting insert 3 of the first processing. In this way, a plurality of cutting inserts alternately performs rough processing and deburring processing. This will be described in more detail by referring to Figs. 16 and 17.

Fig. 16 is an outline diagram illustrating a situation in which the first cutting insert is performing cutting. As illustrated in Fig. 16, since the cutting edge angle κ1 of the first main cutting edge 21 has an approximately ordinary size, when the first main cutting edge 21 of the first cutting insert 3 is withdrawn from the workpiece, a portion to be cut off by the second main cutting edge 22 is not cut off but might fall in the radial direction or the feeding direction of the indexable face milling cutter 100 and become burrs. That is, when the first main cutting edge 21 is withdrawn from the workpiece, a portion of the workpiece having a smaller width may sometimes not be able to stand the cutting resistance and fall while being plastically deformed. Then, a portion which fell and remained becomes burrs.

Fig. 17 is an outline diagram illustrating a situation in which a second cutting insert is performing cutting. As illustrated in Fig. 17, after the first main cutting edge 21 is withdrawn from the workpiece, the burr-suppressing edge 25 of the second cutting insert 3 cuts off the portion which has not been cut by the first cutting insert 3. That is, the first main cutting edge 21 of the first cutting insert 3 and the burr-suppressing edge 25 of the second cutting insert 3 are in a complementary relationship, and the burr formed by the first main cutting edge 21 of the first cutting insert 3 is cut off by the burr-suppressing edge 25 of the second cutting insert 3. Then, since the cutting edge angle κ2 of the burr-suppressing edge 25 of the second cutting insert 3 is usually slight, a substantial cut depth is small, and a thickness of a generated chip is also small. Therefore, when the burr-suppressing edge 25 of the second cutting insert 3 is withdrawn from the workpiece, the portion to be cut off by the burr-suppressing edge 25 of the subsequent cutting insert 3 is completely cut off without falling in the radial direction or in the feeding direction of the tool body 101.

The recess portion 24 not involved in cutting (not in contact with the workpiece) is made up of the whole of the descending inclination portion 22a of the second main cutting edge 22 and a part of the ascending inclination portion 22b adjacent to the descending inclination portion 22a, and by interposing this between the first main cutting edge 21 as well as the corner portion 20 and the burr-suppressing edge 25, the first main cutting edge 21 as well as the corner portion 20 and the burr-suppressing edge 25 are separated from each other. That is, by means of formation of the recess portion 24, a gap having a certain size is formed between the first main cutting edge 21 as well as the corner portion 20 and the burr-suppressing edge 25. As a result, the chips generated from the first main cutting edge 21 and the corner portion 20 and the chips generated from the burr-suppressing edge 25 are separated from each other. Therefore, the cutting work by the slight cutting edge angle by means of the burr-suppressing edge 25 is performed in a state where the influence of the rough cutting processing by means of the first main cutting edge 21 and the corner portion 20 is excluded. As a result, suppression of burrs by the burr-suppressing edge 25 becomes extremely effective.

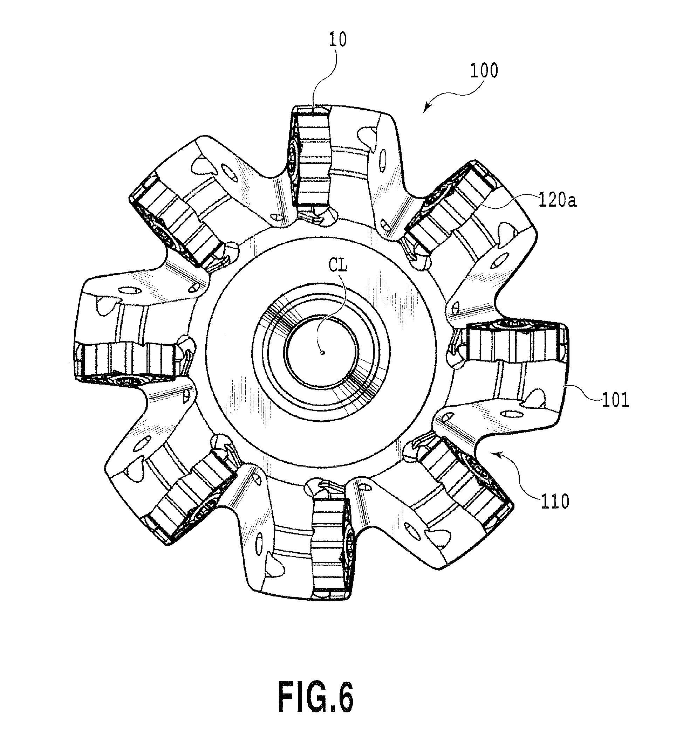

As can be seen from Fig. 6, the burr-suppressing edge 25 is inclined toward the tool rotating direction S side with respect to a radial line of the tool body 101 more largely than the first main cutting edge 21 and the corner portion 20, and has a large negative radial rake. Because of this, the burr-suppressing edge 25 gradually separates from the workpiece, and the portion to be cut off by the burr-suppressing edge 25 is gently cut off. Therefore, the occurrence of burrs is effectively suppressed. Moreover, since the burr-suppressing edge 25 has a negative radial rake, the cutting resistance caused by the burr-suppressing edge 25 is directed in a direction to separate the portion to be cut off by the burr-suppressing edge 25 from the workpiece. This also suppresses burrs effectively as a measure.

Moreover, since the cutting edge angle κ2 of the burr-suppressing edge 25 is set within a range of 5° to 15°, a burr suppressing effect becomes high. Moreover, since the cutting edge angle κ2 of the burr-suppressing edge 25 is set to such a range, the thickness of the chips generated by the burr-suppressing edge 25 becomes small, and the cutting resistance is extremely reduced. As a result, damage such as chipping or a defect of the burr-suppressing edge 25 can be prevented, and the suppressing effect of occurrence of burrs is maintained for a long time.
Moreover, also by the fact that the protrusion amount of the most leading end of the burr-suppressing edge 25 is limited to 0.1 mm or more and 0.3 mm or less with respect to the most leading end of the corner portion 20, the suppression of occurrence of burrs and the reduction of damage on the burr-suppressing edge 25 are achieved.

The wiper cutting edge 23 is a cutting edge protruding the most to the leading end side and is formed continuously to the inner periphery side of the burr-suppressing edge 25. The wiper cutting edge 23 performs cutting subsequent to the cutting by the burr-suppressing edge 25 and finishes the worked surface of the workpiece smoothly. As a result, a high quality worked surface with excellent surface roughness can be obtained.

In this cutting insert 1, the recess portion 24 and the burr-suppressing edge 25 are formed by the descending inclination portion 22a and the ascending inclination portion 22b inclined in the thickness direction of the cutting insert 10 when viewed from the side face facing the flank 12b of the second main cutting edge 22. Therefore, the flank 12 of the second main cutting edge 22 is formed of a single plane without projections or recesses. As a result, when this cutting insert 1 is attached to the insert mounting seat 120 of the tool body 101, the flank 12b of the second main cutting edge 22 can be reliably supported by the wall surface of the insert mounting seat 120. In contrast, the wall surface of the insert mounting seat 120 can be molded easily.

The ridge extending from one end of the wiper cutting edge 23 to the inside in the radial direction of the tool body 101 is a crossing ridge between the flank 12b extending from the second main cutting edge 22 formed on the bottom surface on the back side of the cutting insert 1 and the rake face 11. This ridge retreats to the base end side of the tool body 101 from the wiper cutting edge 23 and is not in contact with the workpiece at all. As a result, if the cutting insert 1 is turned upside down to have the bottom surface on the back side as the rake face 11, the second main cutting edge 22 formed on this rake face 11 can be used in a sound state.

### (Second Embodiment)

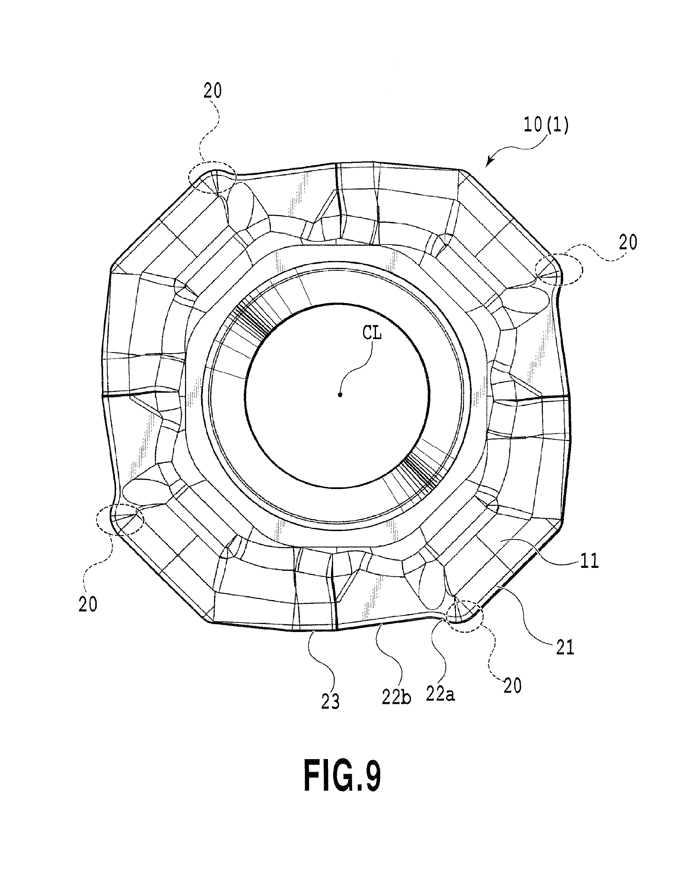

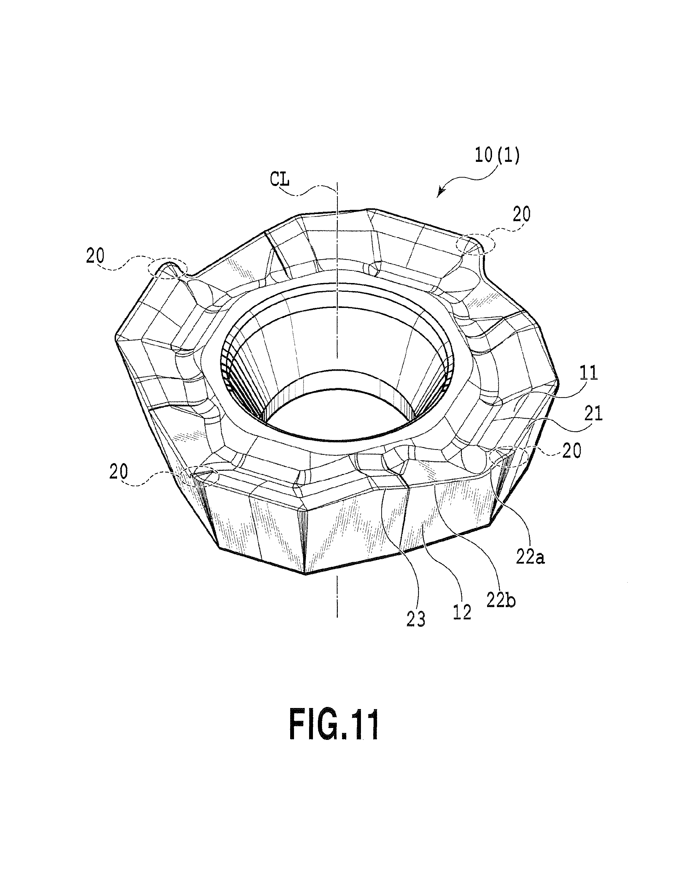

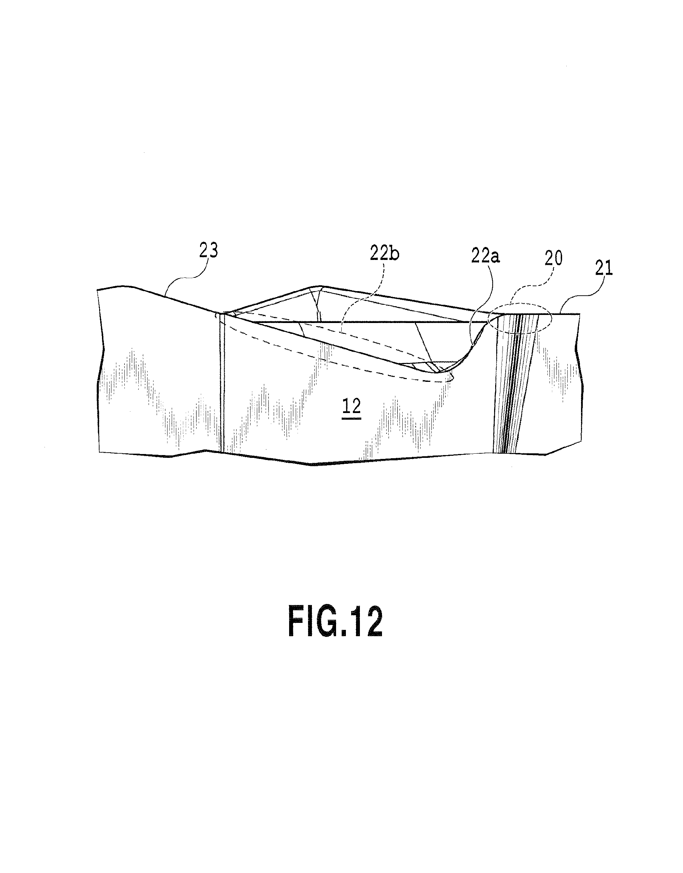

Subsequently, a cutting insert 1 according to a second embodiment will be described by referring to Figs. 9 to 12. In the configurations of the second embodiment, the same reference numerals as those in the first embodiment are given to the same configurations as those in the first embodiment, and the explanation will be omitted.

As illustrated in Figs. 9 to 11, the cutting insert 1 according to the second embodiment has an approximately octagonal plate shape. The rake face 11 is formed only on a somewhat irregular octagonal surface on the top surface. The bottom surface of the cutting insert 1 is smaller than the top surface, and the outer peripheral surface extending between the both is inclined toward the inside of the cutting insert 1 as it goes from the top surface to the bottom surface. That is, the cutting insert 1 according to this embodiment is a positive-type insert.
The flank 12 is formed on the outer peripheral surface of the cutting insert 1.
The cutting edge is formed on a crossing ridge portion between the rake face 11 and the flank 12. The rake face 11 and the flank 12 intersect with each other at a sharp angle, and a positive relief angle is given to the flank 12. That is, this cutting insert 1 uses only the corner portion 20 formed at four spots on the top surface of the octagon.

The first main cutting edge 21 extends approximately linearly in a direction orthogonal to the thickness direction of the cutting insert 1. The rake face 11a adjacent to the first main cutting edge 21 is inclined in a direction where the thickness of the cutting insert 1 decreases as it goes away from this main first cutting edge 21, and has a positive rake angle. In other words, the rake face 11a adjacent to the main first cutting edge 21 is formed to be inclined downward, from the intersection portion with the first main cutting edge 21 as a base point, toward the center of the cutting insert 1.
Moreover, the rake face 11b adjacent to the second main cutting edge 22 has a descending inclination surface and an ascending inclination surface corresponding to the descending inclination portion 22a and the ascending inclination portion 22b and is inclined in a direction where the thickness of the cutting insert 1 decreases as it goes away from the second main cutting edge 22, and has a positive rake angle.

In the same way as in the first embodiment, on the rake face 11, the corner portion 20 having an approximately arc shape on plan view, the approximately linear first main cutting edge 21 extending from one end portion of the corner portion 20, and the second main cutting edge 22 extending from the other end portion of the corner portion 20 are formed at four spots.

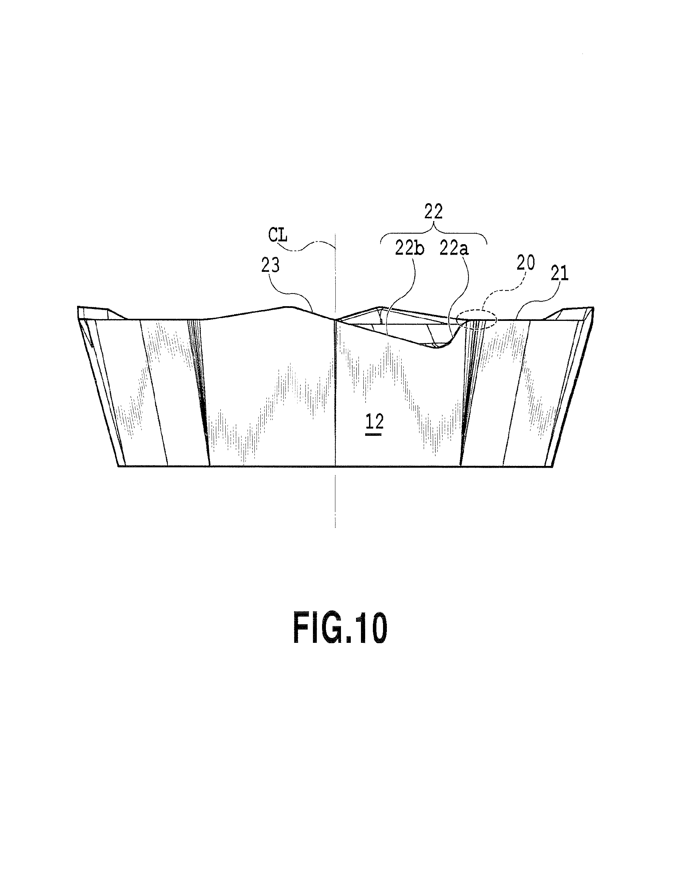

As illustrated in Fig. 10, this cutting insert 1 has the descending inclination portion 22a and the ascending inclination portion 22b in the same way as in the first embodiment. By a combination (synthesis) of inclination when viewed from the side (direction perpendicular to the flank 12) facing the respective flanks 12 of the descending inclination portion 22a and the ascending inclination portion 22b and inclination corresponding to the positive relief angle of the flank 12 extending from the second main cutting edge 22, the second main cutting edge 22 has a predetermined shape when viewed from the side facing the rake face 11. That is, as illustrated in Fig. 18, the whole of the descending inclination portion 22a of the second main cutting edge 22 and a part of the ascending inclination portion 22b adjacent to the descending inclination portion 22a are recessed to the tool base end side from the most leading end of the corner portion 22a and this portion becomes the recess portion 24 not involved in cutting, that is, not in contact with the workpiece. The remaining portion of the ascending inclination portion 22b not constituting the recess portion 24 protrudes closer to the tool leading end side than the most leading end of the corner portion 20 and serves as the burr-suppressing edge 25 involved in cutting. The wiper cutting edge 23 which is approximately linear when viewed from the side facing the flank 12 is formed on the ridge portion extending from the end portion on the side opposite to the corner portion 20 of the second main cutting edge 22. The wiper cutting edge 23 intersects with the second main cutting edge 22 at an obtuse angle when viewed from the side facing the rake face 11 and extends linearly in a direction orthogonal to the thickness direction of the cutting insert 10 when viewed from the side facing the flank 12. The ridge extending from the end portion on the side opposite to the corner portion 20 of the wiper cutting edge 23 intersects with the wiper cutting edge 23 at an obtuse angle when viewed from the side facing the rake face 11. It should be noted that the wiper cutting edge 23 may be omitted.

This cutting insert 1 has the corner portion 20, the first main cutting edge 21, the second main cutting edge 22, and the wiper cutting edge 23 formed at four spots on the top surface and is a cutting insert 1 having 4 corners usable, in which only this top surface is used as the rake face 11.

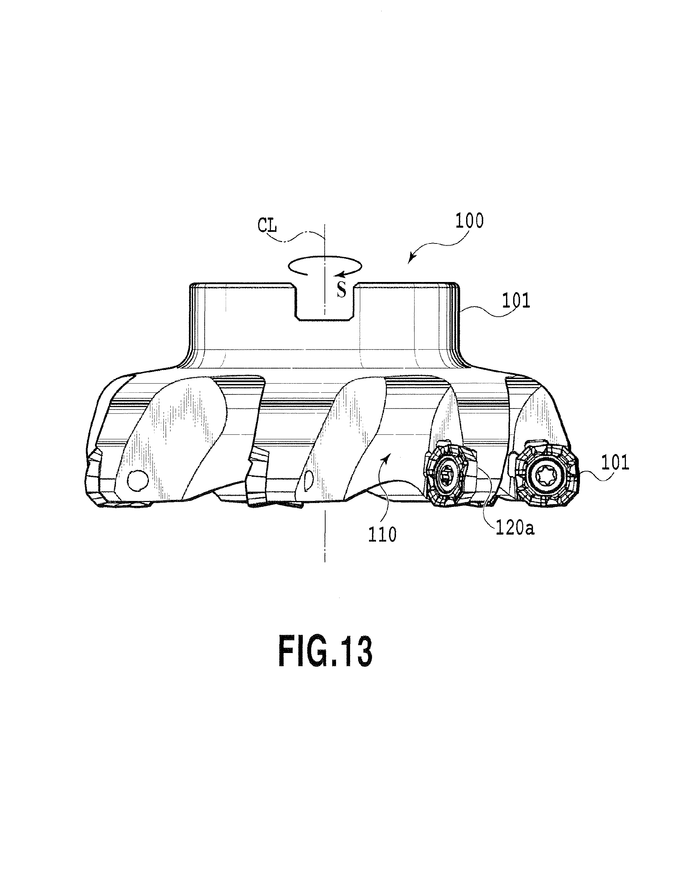

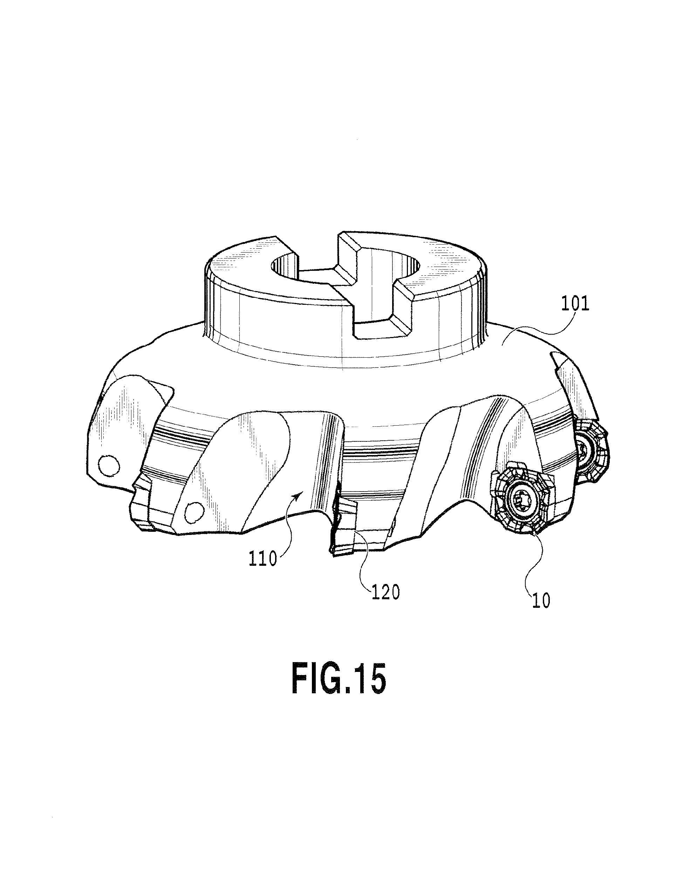

Subsequently, the indexable face milling cutter 100 to which the cutting insert 1 according to the second embodiment is attached will be described by using Figs. 13 to 15. In this indexable face milling cutter 100, the insert mounting seat 120 is formed so as to be inclined to the rear side in the tool rotating direction S with respect to the rotation axis AX of the tool body 101 and so as to be inclined to the rear side in the tool rotating direction S with respect to the radial line of the tool body 101. The cutting insert 1 is placed with the bottom surface and two outer peripheral surfaces in contact with the bottom surface and two wall surfaces of the insert mounting seat 120, respectively, and is detachably attached by tightening the tightening screw inserted through a mounting hole into the screw hole provided in the bottom surface of the insert mounting seat 120.

The cutting insert 1, in accordance with the insert mounting seat 120, is attached to the tool body 101 so as to be inclined to the rear side in the tool rotating direction S with respect to the rotation axis AX of the tool body 101 and to be inclined to the rear side in the tool rotating direction S with respect to the radial line of the tool body 101 and to have a positive axial rake and a negative radial rake. In this embodiment, the axial rake is set to 5° and the radial rake is set to -6°.

One of the corner portions 20 of the cutting insert 1 is disposed at the leading end outer peripheral portion of the tool body 101. When the tool body 101 rotates around the rotational axis AX, the rotation shape of the corner portion 20, the first main cutting edge 21, the second main cutting edge 22, and the wiper cutting edge 23 is a shape as illustrated in Fig. 18. The first main cutting edge 21 extending from one of the corner portions 20 to the tool base end side and the outer periphery side is inclined with respect to the plane orthogonal to the rotation axis AX of the tool body 101 and the inclination angle, that is, the cutting edge angle κ1 is approximately 45°.

As illustrated in Fig. 18, the cutting insert 1 attached to the tool body 101 sequentially constitutes the second main cutting edge 22 (descending inclination portion 22a, ascending inclination portion 22b) and the wiper cutting edge 23, from the corner portion 20 to the inside in the radial direction of the tool body 101. Just like the second main cutting edge 22 in the first embodiment, the whole of the descending inclination portion 22a of the second main cutting edge 22 and a part of the ascending inclination portion 22b adjacent to the descending inclination portion 22a are recessed to the tool base end side from the most leading end of the corner portion 20 and constitute the recess portion 24 not involved in cutting, that is, not in contact with the workpiece.
The remaining portion of the ascending inclination portion 22b not constituting the recess portion 24 protrudes from the most leading end of the corner portion 20 to the tool leading end side and constitutes the burr-suppressing edge 25 involved in cutting. The inner peripheral end of the burr-suppressing edge 25 and the wiper cutting edge 23 extending from this inner peripheral end to the inner periphery side are located on the most leading end side and have a protrusion amount of 0.1 mm or more and 0.3 mm or less with respect to the most leading end of the corner portion 20. The wiper cutting edge 23 has a linear shape and extends in a direction approximately parallel to the plane orthogonal to the rotation axis AX of the tool body 101. Moreover, the cutting edge angle κ2 of the burr-suppressing edge 25 is extremely smaller than the cutting edge angle κ1 of the first main cutting edge 21 and within a range of 5° or more and 15° or less.

According to the cutting insert 1 and the indexable face milling cutter 100 to which this cutting insert 1 is attached as described above, the occurrence of burrs on the worked surface can be prevented in the same way as in the first embodiment.

By the fact that the recess portion 24 not involved in cutting is interposed between the first main cutting edge 21 as well as the corner portion 20 and the burr-suppressing edge 25, the first main cutting edge 21 as well as the corner portion 20 and the burr-suppressing edge 25 are separated from each other. As a result, the chips generated from the first main cutting edge 21 and the corner portion 20 and the chips generated from the burr-suppressing edge 25 become independent of each other and separate. That is, the cutting of slight cutting by the burr-suppressing edge 25 is performed in a state where the influence of cutting by the first main cutting edge 21 and the corner portion 20 is excluded. As a result, suppression of burrs by the burr-suppressing edge 25 becomes extremely effective.

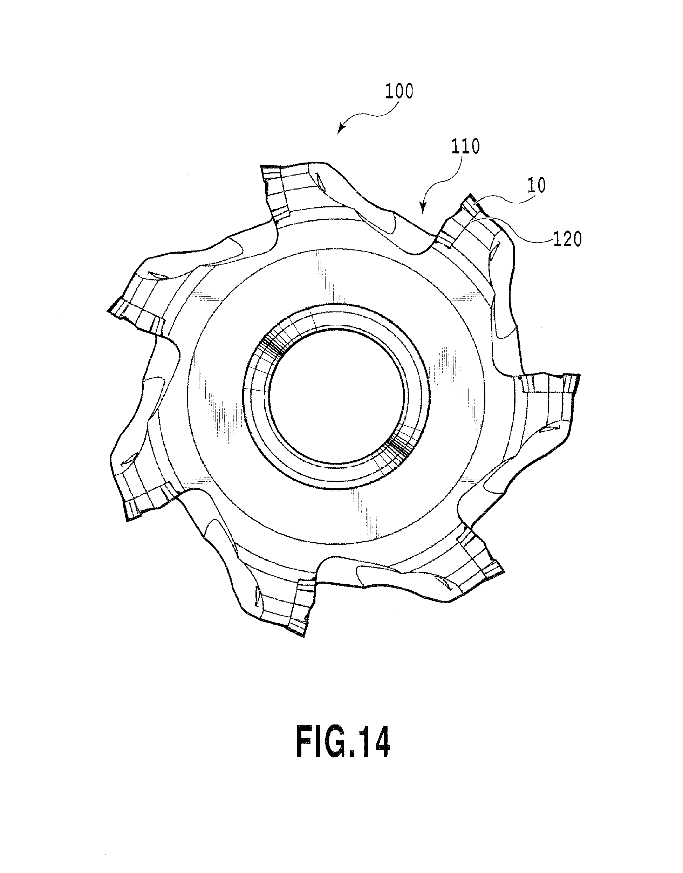

As can be seen from Fig. 14, also in this embodiment, the burr-suppressing edge 25 is inclined to the tool rotating direction S side with respect to the radial line of the tool body 101 more largely than the first main cutting edge 21 and the corner portion 20, and has a large negative radial rake. Because of this, a reaction force caused by the cutting resistance caused by the burr-suppressing edge 25 is directed to a direction of detaching the portion to be cut off by the burr-suppressing edge 25 from the workpiece (direction to the outward of the cutting tool). Therefore, since the force works in the direction of detaching the burrs from the workpiece when the cutting insert is withdrawn from the workpiece, the burrs can be effectively suppressed. Moreover, the burr-suppressing edge 25 is inclined with respect to the tool rotating direction S more largely than the first main cutting edge 21 and the corner portion 20. As a result, as compared with small inclination of the burr-suppressing edge 25 to the negative radial rake angle side, the burr-suppressing edge 25 departs from the workpiece gradually. That is, it passes through the departing portion from the workpiece while the cutting edge is largely inclined. Because of this, the workpiece can be cut with the burr-suppressing edge 25 inclined, and the portion to be cut off is gently cut off, and thus the burrs can be effectively suppressed.

In this cutting insert 1, a positive rake angle larger than that of the first embodiment is ensured with respect to the rake face 11 adjacent to the second main cutting edge 22, by adding the positive axial rake on the indexable face milling cutter 100 to the positive rake angle of its own. As a result, the burr-suppressing edge 25 cuts better than the first embodiment, and the cutting resistance occurring in the burr-suppressing edge 25 acts in a direction of detaching the portion to be cut off from the worked surface. Thus, the burr suppressing effect is further improved.

The wiper cutting edge 23 is the cutting edge protruding to the most leading end side and is formed continuously on the inner periphery side of the burr-suppressing edge 25 and smoothly finishes the worked surface of the workpiece subsequent to the cutting by the burr-suppressing edge 25. As a result, a high-quality worked surface excellent in surface roughness can be obtained.

In this cutting insert 1, the recess portion 24 and the burr-suppressing edge 25 are formed by the descending inclination portion 22a and the ascending inclination portion 22b inclined in the thickness direction of the cutting insert 1 when viewed from the side facing the flank 12 of the second main cutting edge 22. Therefore, the flank 12 of the second main cutting edge 22 is formed of a single plane without projections or recesses. As a result, when this cutting insert 1 is attached to the mounting seat of the tool body 101, the flank 12 of the second main cutting edge 22 can be reliably supported by the wall surface of the mounting seat. In contrast, the wall surface of the insert mounting seat 120 can be molded easily.

The present invention is not limited to the embodiments described above but the shape of the top and bottom surfaces of the cutting insert 1 can be modified to, for example, a triangle, a square, a pentagon or the like other than an octagon. It is also needless to say that an indexable tool to which the cutting insert 1 is attached, can be applied to a lathe turning tool such as a turning tool or a boring tool, and a drilling tool such as a drill, a boring cutter or a reamer.

## Claims

1. A cutting insert formed of a plate-like member with a substantially polygonal outer shape and comprising:
a rake face formed on at least one of top and bottom surfaces opposite to each other in a direction of a central axis of the cutting insert;
a flank extending between the top and bottom surfaces and being formed on an outer peripheral surface of the cutting insert; and
a cutting edge formed at an intersection portion between the rake face and the flank, wherein
the cutting edge comprises a corner portion, a first main cutting edge formed on one side of the corner portion, and a second main cutting edge formed on the other side of the corner portion;
the second main cutting edge comprises a descending inclination portion gradually inclined in a direction from the side of a face on which the rake face is formed in the top and bottom surfaces toward the side of a surface facing the rake face as it separates from the corner portion and an ascending inclination portion gradually inclined in a direction from the side of the surface facing the rake face toward the side of the surface on which the rake face is formed, as it separates from the corner portion;
the ascending inclination portion is connected to the descending inclination portion; and
at least a connection region of the ascending inclination portion and the descending inclination portion forms a concave curved recess portion.

2. The cutting insert according to claim 1, wherein
the recess portion is uninvolved in cutting during cutting processing.

3. The cutting insert according to claim 1 or 2, wherein
the descending inclination portion is connected to the corner portion.

4. The cutting insert according to claim 1, wherein
the cutting edge further comprises a wiper cutting edge being formed adjacent to the ascending inclination portion and extending in a plane orthogonal to the central axis.

5. The cutting insert according to any one of claims 1 to 4, wherein
a plurality of the corner portions arranged at positions symmetrical to the central axis are provided on each of the top and bottom surfaces, and the first main cutting edge and the second main cutting edge are formed at each of the corner portions, respectively; and
the cutting insert is orthogonal to the central axis, passes through the middle of the top and bottom surfaces, and is rotationally symmetric by 180° with respect to an axis parallel to the first main cutting edge.

6. An indexable cutting tool comprising:
the cutting insert according to any one of claims 1 to 5; and
a tool body in which an insert mounting seat for detachably attaching the insert is provided at a predetermined position, wherein
the cutting insert is attached to the tool body, such that
the first main cutting edge is disposed so as to protrude from an outer peripheral surface of the tool body,
the second main cutting edge is disposed so as to protrude from a leading end surface of the tool body,
the descending inclination portion of the second main cutting edge comprises a negative cutting edge angle; and
the ascending inclination portion of the second main cutting edge comprises a positive cutting edge angle.

7. The indexable cutting tool according to claim 6, wherein
a cutting edge angle of the ascending inclination portion is 5° or more and 15° or less.

8. The indexable cutting tool according to claim 6 or 7, wherein
an outer peripheral end of the descending inclination portion protrudes closer to the leading end side in the axis direction of the tool body than an inner peripheral end and the protrusion amount is 0.1 mm or more and 0.3 mm or less.

9. An indexable cutting tool comprising:
the cutting insert according to any one of claims 1 to 5 and
a tool body in which an insert mounting seat to which the insert is detachably attached is provided at a predetermined position, wherein
at least a connection region of the descending inclination portion and the ascending inclination portion of the cutting insert attached to the insert mounting seat forms a recess portion uninvolved in cutting during cutting processing and a remaining portion of the ascending inclination portion not constituting the recess portion forms a burr-suppressing edge protruding closer to a leading end side of the tool body than the corner portion connected to the descending inclination portion.
